# FASCICULE DE BREVET EUROPEEN

(11) **EP 0 440 556 B1**
(45) Date de publication et mention de la délivrance du brevet: **20.04.1994**
(21) Numéro de dépôt: 91400228.2
(22) Date de dépôt: 31.01.1991
(51) Int. Cl.: H02G 3/12, H01R 25/16

(54) **Boîte d'encastrement à prolongement latéral, notamment pour appareil électrique**
Einbaudose mit Seitenverlängerung, insbesondere für elektrisches Gerät
Flush-mounted box with lateral extension, in particular for electrical apparatus

(30) Priorité: 02.02.1990 FR 9001215
(43) Date de publication de la demande: 07.08.1991
(73) Titulaire: LEGRAND, F-87045 Limoges Cédex (FR)
(72) Inventeur: Buard, Yvon, F-53600 Voutre (FR)
(74) Mandataire: CABINET BONNET-THIRION

(56) Documents cités:
- EP-A- 0 239 456
- CH-A- 427 950
- FR-A- 1 367 235

## Description

La présente invention concerne d'une manière générale les boîtes d'encastrement qui, destinées à être implantées au sein même du matériau constitutif d'un quelconque mur ou d'une quelconque cloison, sont mises en oeuvre pour l'implantation d'un quelconque appareil, et notamment d'un quelconque appareil électrique, sur un tel mur ou sur une telle cloison, leur volume intérieur formant un logement propre à la réception du mécanisme que comporte un tel appareil.

A ce jour, la mise en oeuvre de ces boîtes d'encastrement ne se fait usuellement que dans le cas où, dûment disposés dans un tube qui en assure la protection, les conducteurs électriques nécessaires à la desserte de l'appareil concerné sont eux-mêmes noyés au sein du matériau constitutif du mur ou de la cloison à équiper.

Ces boîtes d'encastrement ne conviennent par contre normalement pas dans le cas où ces conducteurs électriques sont disposés dans une moulure, une plinthe ou une quelconque autre goulotte rapportée en saillie sur un tel mur ou sur une telle cloison.

Dans un tel cas, deux dispositions sont usuellement adoptées.

Soit le mécanisme de l'appareil concerné est logé dans une boîte d'encastrement trouvant sa place dans la goulotte correspondante, ce qui suppose que celle-ci présente à cet effet une largeur et une hauteur suffisantes, soit tel que décrit dans le document EP.A-0 239 456 il est logé dans un boîtier adaptateur adossé latéralement à cette goulotte, en étant alors comme celle-ci en saillie sur le mur ou la cloison concerné.

Dans l'un et l'autre cas, la saillie ainsi présente sur un tel mur ou sur une telle cloison est nécessairement relativement accentuée, au détriment de l'esthétique de l'ensemble.

Il est connu, par ailleurs, des boîtes d'encastrement, communément dites boîtes de chambranle, qui, outre le logement qu'elles présentent pour la réception du mécanisme d'un quelconque appareil, comportent, latéralement, un prolongement dont le volume intérieur est en liaison avec celui de ce logement, ces boîtes d'encastrement étant en général destinées à être adossées, et fixées, au chambranle d'une quelconque ouverture, tout en étant noyées dans le matériau constitutif du mur ou de la cloison dans lequel celle-ci est pratiquée.

Mais, en pratique, le prolongement latéral de ces boîtes d'encastrement présente usuellement à ce jour un contour transversal fermé en caisson.

Comme précédemment, donc, ces boîtes d'encastrement à prolongement latéral ne sont usuellement mises en oeuvre à ce jour que dans le cas où les conducteurs électriques nécessaires à la desserte de l'appareil concerné sont eux aussi noyés au sein du matériau constitutif du mur ou de la cloison sur lequel est rapporté cet appareil.

La présente invention a d'une manière générale pour objet une disposition qui, en autorisant la mise en oeuvre d'une boîte d'encastrement à prolongement latéral même dans le cas où les conducteurs électriques correspondants sont disposés au sein d'une goulotte, permet avantageusement de minimiser la saillie pratiquée sur le mur ou la cloison à équiper et facilite en outre le câblage à assurer.

De manière plus précise, elle a pour objet une boîte d'encastrement, notamment pour appareil électrique, qui est destinée à être implantée au sein même du matériau constitutif d'un quelconque mur ou d'une quelconque cloison, et dont le volume intérieur forme un logement propre à la réception du mécanisme d'un tel appareil électrique, avec, latéralement, un prolongement dont le volume intérieur est en liaison avec celui dudit logement, cette boîte d'encastrement étant d'une manière générale caractérisée en ce que, ledit prolongement est au moins en partie ouvert en façade, en sorte que son volume intérieur est au moins en partie accessible de l'avant, et en ce qu'il est associé audit prolongement un couvercle amovible apte à en refermer ledit volume intérieur.

Préférentiellement, ce prolongement a un profil en U sur toute sa longueur, et, lors de la mise en oeuvre de la boîte d'encastrement, le corps de la goulotte correspondante est tronçonné de part et d'autre de ce prolongement cependant que son couvercle s'étend en continu au-dessus de celui-ci.

Il est cependant envisageable que la goulotte s'étende dans son intégralité en continu, corps et couvercle, sur ce prolongement.

Quoi qu'il en soit, la saillie sur le mur ou la cloison concerné se limite avantageusement à celle due à cette seule goulotte, et donc à celle nécessaire au seul logement des conducteurs électriques concernés.

En outre, le câblage correspondant peut avantageusement se faire par l'avant, sans engagement de ces conducteurs dans un quelconque tube, ce qui en facilite largement l'exécution.

En particulier, ce câblage peut avantageusement se faire avec du mou, la portion alors en surplus des conducteurs électriques trouvant ensuite facilement son logement dans le volume intérieur, largement dimensionné, du prolongement de la boîte d'encastrement.

Après ce câblage, ce prolongement, ou, plus précisément, la partie de ce prolongement non recouverte par le couvercle, ou la totalité, de la goulotte correspondante, est refermé par le couvercle qui lui est spécifiquement associé.

Pour ce faire, ce couvercle est avantageusement sécable, ce qui permet d'en adapter la longueur à celle de la portion du prolongement de la boîte d'encastrement non recouverte par le couvercle, ou la totalité, de la goulotte.

De préférence, également, et suivant un développement de l'invention, le couvercle associé au prolongement de la boîte d'encastrement est réversible, en comportant une face lisse et une face munie de saillies, telles que nervures ou autres.

Lorsqu'il est mis en oeuvre du côté de sa face lisse, il s'étend à ras avec le débouché de ce prolongement, et donc à ras avec la surface du mur ou de la cloison concernée.

Il est alors plus particulièrement adapté à demeurer apparent, ou à être recouvert, en continu avec cette surface, par un revêtement de faible épaisseur du type couche de peinture, papier peint ou tapisserie par exemple.

Par contre, lorsque ce couvercle est mis en oeuvre du côté de sa face munie de saillies, il s'étend en retrait par rapport au débouché du prolongement de la boîte d'encastrement.

Il est donc plus particulièrement adapté à recevoir une couche de plâtre, ou d'enduit, en favorisant, par ses saillies, l'adhérence de ce plâtre ou de cet enduit, et en étant alors lui aussi noyé au sein d'un tel produit.

Dans ce cas, le prolongement latéral de la boîte d'encastrement n'est plus apparent en surface.

Ainsi, la boîte d'encastrement suivant l'invention se satisfait avantageusement d'une certaine diversité de mise en oeuvre, au gré des intéressés.

Les caractéristiques et avantages de l'invention ressortiront d'ailleurs de la description qui va suivre, à titre d'exemple, en référence aux dessins schématiques annexés sur lesquels :
la figure 1 est une vue en perspective éclatée d'une boîte d'encastrement suivant l'invention et du couvercle qui lui est associé ;
la figure 2 est une vue en perspective éclatée de cette seule boîte d'encastrement ;
la figure 3 en est une vue en coupe longitudinale, suivant la ligne III-III de la figure 2 ;
les figures 4 et 5 en sont des vues en coupe transversale, suivant, chacune respectivement, les lignes IV-IV et V-V de la figure 3, avec un arrachement sur la figure 4 ;
la figure 6 est une vue en coupe longitudinale du couvercle qui lui est associé, suivant la ligne VI-VI de la figure 1 ;
la figure 7 est une vue en plan, vu de l'arrière, de ce couvercle, suivant la flèche VII de la figure 6 ;
la figure 8 est une vue en perspective éclatée analogue à celle de la figure 1, pour une autre boîte d'encastrement suivant l'invention ;
les figures 9, 10, 11, 12, 13, 14 et 15 sont, à échelle inférieure, des vues en perspective illustrant diverses phases de mise en oeuvre d'une boîte d'encastrement suivant l'invention ;
les figures 16 et 17 sont des vues en perspective qui, chacune respectivement analogues à celles des figures 13 et 15, concernent une variante de mise en oeuvre.

Ces figures illustrent, à titre d'exemple, l'application de l'invention à l'implantation d'un appareil électrique 10, en l'espèce un socle de prise de courant, au bas d'un mur 11, avec, pour le logement des conducteurs électriques 13 propres à la desserte de cet appareil électrique 10, une goulotte 15 rapportée en plinthe au ras du sol 16 correspondant.

De manière connue en soi, et suivant des dispositions qui, ne relevant pas de la présente invention, ne seront pas décrites en détail ici, la goulotte 15 comporte un corps de goulotte 17, à tronçonner à la demande, et un couvercle 18 propre à coiffer, jusqu'à sa semelle, ce corps de goulotte 17.

De manière également connue en soi, il est mis en oeuvre, pour l'implantation de l'appareil électrique 10, une boîte d'encastrement 20, qui est destinée à être implantée au sein même du matériau constitutif du mur 11, à la faveur d'une cavité 21 creusée à cet effet dans celui-ci, et dont le volume intérieur forme un logement 22 propre à la réception du mécanisme, non représenté, de l'appareil électrique 10, avec, latéralement, un prolongement 23 dont le propre volume intérieur est en liaison avec celui du logement 22.

Dans la forme de réalisation représentée, le logement 22 a, en plan, un contour globalement carré, avec des zones d'angle abattues par des pans coupés 24.

Il est défini par un fond 25 et trois parois latérales 26, le prolongement 23 s'étendant à compter du quatrième de ses côtés, perpendiculairement à celui-ci.

Ce prolongement 23 est lui-même défini par un fond 28, qui, dans les formes de réalisation représentées, est sensiblement à niveau avec le fond 25 du logement 22, deux parois longitudinales 29, qui s'étendent sensiblement parallèlement l'une à l'autre, à une distance, l'une de l'autre, qui, dans ces formes de réalisation, est inférieure à la largeur du logement 22, et, perpendiculairement aux parois longitudinales 29 précédentes, une paroi transversale d'extrémité 30.

Par cette paroi transversale d'extrémité 30, la boîte d'encastrement 20 est adaptée à porter à plat, si désiré, sur une quelconque surface d'appui, qui, comme en l'espèce, peut être le sol 16, mais qui peut aussi bien appartenir par exemple à l'un ou l'autre des montants d'un quelconque chambranle.

Dans les formes de réalisation représentées, cette paroi transversale d'extrémité 30 se prolonge, latéralement, de part et d'autre, par des ailes de fixation 31, munies de perçages 32 et d'échancrures 33 propres, si désiré, à la fixation de l'ensemble à la surface d'appui correspondante.

Suivant l'invention, sur une partie au moins de sa longueur, et, en pratique, sur la totalité de celle-ci, le prolongement 23 est au moins en partie ouvert en façade, en sorte que son volume intérieur est au moins en partie accessible de l'avant, et, suivant des modalités décrites plus en détail ultérieurement, il lui est associé un couvercle 35 apte à en refermer ce volume intérieur.

Dans les formes de réalisation représentées, le prolongement 23 a un profil en U sur toute sa longueur.

Intérieurement, il présente, le long de ses parois longitudinales 29, en retrait par rapport à son débouché 36, des épaulements 37.

Dans les formes de réalisation représentées, ces épaulements 37 sont formés à la faveur de décrochements que présentent, en équerre, en directions opposées l'une par rapport à l'autre, les parois longitudinales 29.

Intérieurement, le prolongement 23 présente, en outre, de place en place, le long de ses parois longitudinales 29, et en correspondance de l'une à l'autre de celles-ci, des saignées 38.

Dans les formes de réalisation représentées, ces saignées 38 affectent les épaulements 37, et, ouvertes vers l'avant et vers l'intérieur, elles sont borgnes sur leurs autres côtés.

Dans les formes de réalisation représentées, les parois longitudinales 29 du prolongement 23 sont crénelées au-delà des épaulement 37.

Autrement dit, elles présentent, de place en place, au-delà de ces épaulements 37, des échancrures 40.

Dans les formes de réalisation représentées, ces échancrures 40 s'étendent jusqu'au ras des épaulements 37.

Leur nombre dépend de la longueur du prolongement 23.

Dans les formes de réalisation représentées, le prolongement 23 présente, extérieurement, le long de ses parois longitudinales 29, en retrait par rapport à son débouché 36, et, en pratique, sensiblement à niveau avec ses épaulements 37, des retours en équerre 41, qui sont dirigés en sens opposés l'un par rapport à l'autre, et qui, dans ces formes de réalisation, sont ajourés, de place en place, par des perçages 42.

Dans les formes de réalisation représentées, les parois longitudinales 29 du prolongement 23 présentent chacune, pour le passage éventuel de conducteurs électriques, au moins un opercule défonçable 43, et il en est de même tant pour son fond 28 que pour sa paroi transversale d'extrémité 30.

Pour des raisons explicitées ultérieurement, la partie centrale 44 de la paroi transversale d'extrémité 30 est, elle aussi, défonçable, et cette paroi transversale d'extrémité 30 présente, par ailleurs, en saillie, sur sa tranche, une nervure 45.

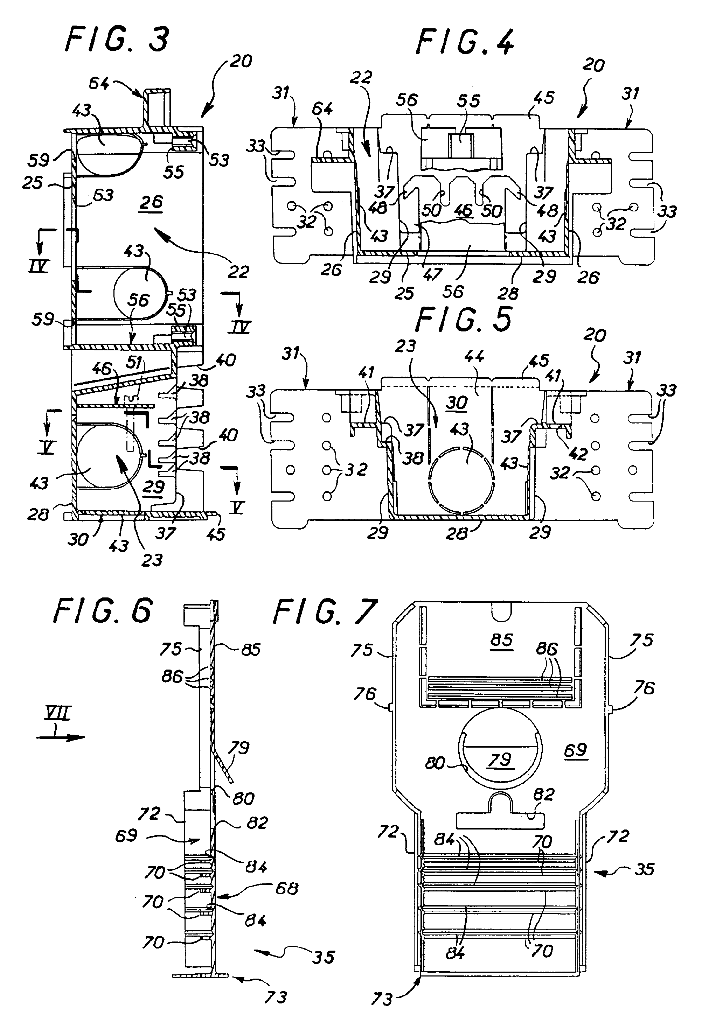

Intérieurement, enfin, le prolongement 23 présente, dans les formes de réalisation représentées, à distance de sa paroi transversale d'extrémité 30, et, en pratique, au voisinage du logement 22, une cloison 46 qui, ainsi qu'il est mieux visible sur la figure 4 à la faveur d'un arrachement, s'étend transversalement entre ses parois longitudinales 29, tout en laissant libres des passages 47 entre elle et ces parois longitudinales 29, et qui, à l'aplomb de ces passages 47, comporte, en porte-à-faux, en direction des parois longitudinales 29, des bras 48.

En pratique, ces bras 48 s'étendent en oblique en direction des parois longitudinales 29 et du fond 28, et, entre eux, la cloison 46 présente, sur sa tranche, des fentes 50, qui, débouchant sur cette tranche, sont aptes à recevoir, en attente, à la disposition de l'usager, et tel que schématisé en traits interrompus sur la figure 3, des vis 51 propres à être mises en oeuvre, si désiré, pour la fixation du mécanisme de l'appareil électrique 10.

Dans les formes de réalisation représentées, il est prévu également un opercule défonçable 43 sur chacune des deux parois latérales 26 du logement 22 qui sont parallèles à l'axe du prolongement 23, ainsi que dans chacune des zones d'angle de ce logement 22 qui sont opposées à ce prolongement 23.

En outre, il est prévu, dans le logement 22, pour la fixation du mécanisme de l'appareil électrique 10, au moins deux zones de fixation 52.

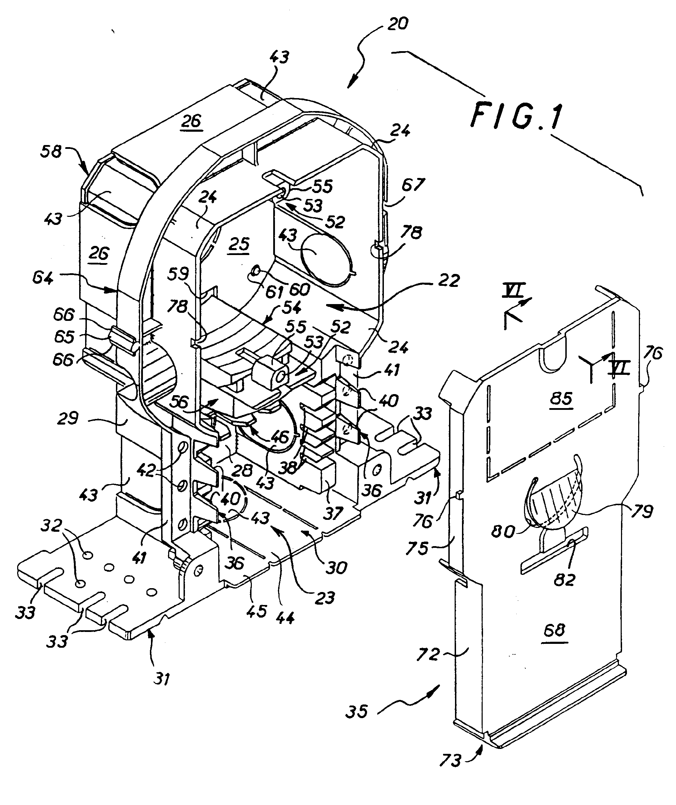

Dans la forme de réalisation plus particulièrement représentée sur les figures 1 à 5, ces zones de fixation 52 sont alignées l'une avec l'autre suivant l'axe du prolongement 23.

Elles comportent, chacune, d'une part, un perçage 53, propre à une fixation par vis, et, d'autre part, un jambage 54, propre à une fixation par griffes.

Les perçages 53 sont formés à la faveur d'oreilles 55.

Pour le perçage 53 le plus éloigné du prolongement 23, cette oreille 55 vient d'un seul tenant de la paroi latérale 26 correspondante du logement 22.

Pour le perçage 53 le plus proche du prolongement 23, elle vient d'un seul tenant d'un piétement 56 issu du fond 25 du logement 22, à la limite entre ce logement 22 et le prolongement 23.

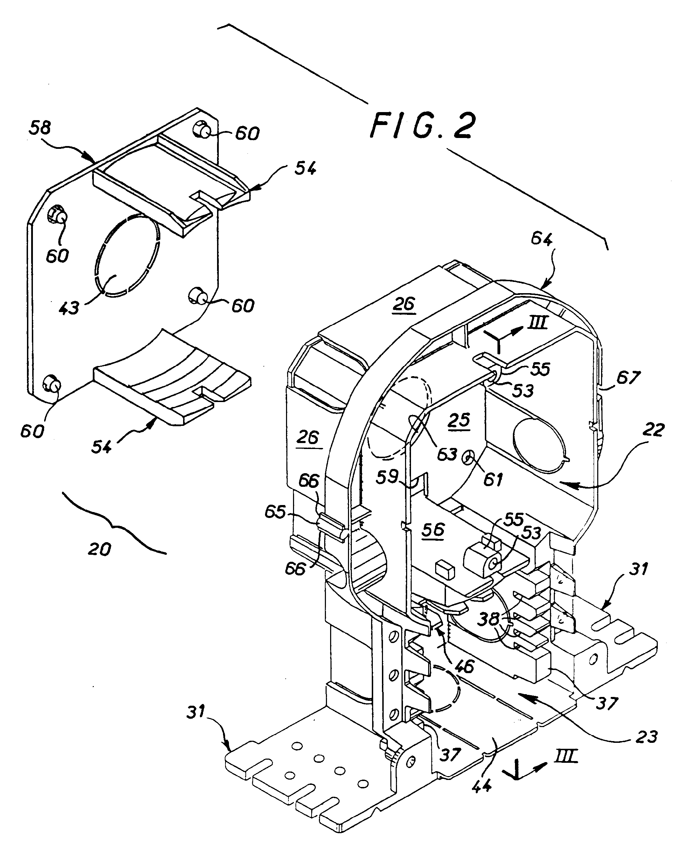

Dans les formes de réalisation représentées, et ainsi qu'il est mieux visible sur la figure 2 pour l'une d'elles, les jambages 54 présents dans le logement 22 sont d'un seul tenant avec une semelle 58, qui, distincte du fond 25 de ce logement 22, double extérieurement ce fond 25, les jambages 54 traversant ce fond 25 à la faveur d'évidements 59 prévus à cet effet dans celui-ci.

Bien entendu, le contour de la semelle 58 est à l'image de celui du fond 25, et cette semelle 58 est convenablement solidarisée à ce fond 25.

Par exemple, et tel que représenté, elle présente en saillie dans ses zones d'angle des pions 60 par lesquels elle est en prise, à force, avec des évidements 61 du fond 25.

Un soudage peut compléter la fixation correspondante ou être substitué à celle-ci.

Dans les formes de réalisation représentées, la semelle 58 présente, dans sa zone centrale, un opercule défonçable 43, et, pour y donner accès, le fond 25 est ajouré d'une ouverture 63.

Dans les formes de réalisation représentées, il est en outre prévu, extérieurement en saillie, autour du logement 22, une collerette 64, dont le contour, en plan, est sensiblement à l'image de celui de ce logement 22, avec cependant des arrondis dans ses zones d'angle, et qui rejoint les retours en équerre 41 des parois longitudinales 29 du prolongement 23.

Sur deux côtés opposés, qui sont ceux parallèles aux parois longitudinales 29 du prolongement 23, cette collerette 64 est munie de moyens d'emboîtement complémentaires.

Il s'agit, par exemple, pour la forme de réalisation plus particulièrement représentée sur les figures 1 à 5, d'une part, sur un côté, d'un bourrelet 65 prolongé latéralement par des ailettes 66, et, d'autre part, sur le côté opposé, d'une fente 67 avec laquelle est susceptible de venir en prise, par sa racine, un bourrelet 65 du type du précédent.

Par la collerette 64 ainsi munie de tels moyens d'emboîtement, la boîte d'encastrement 20 suivant l'invention est avantageusement apte à être solidarisée latéralement, si désiré, à une quelconque autre boîte munie de moyens d'emboîtement de même type, et, par exemple, à une autre boîte d'encastrement 20.

Dans les formes de réalisation représentées, le couvercle 35 est apte à refermer, d'un seul tenant, non seulement le prolongement 23, mais encore le logement 22.

Son contour, en plan, est donc à l'image de celui que forment conjointement, en plan, ce prolongement 23 et ce logement 22.

Suivant l'invention, le couvercle 35 est réversible.

Il présente, d'une part, une face lisse 68, et, d'autre part, au verso de celle-ci, une face munie de saillies 69.

Par exemple, et tel que représenté, les saillies que présente ainsi cette face 69 sont des nervures 70, qui s'étendent, de place en place, transversalement, parallèlement les unes aux autres.

En pratique, ces nervures 70 affectent la seule partie du couvercle 35 qui correspond au prolongement 23.

Dans les formes de réalisation représentées, le couvercle 35 présente, latéralement, du côté de sa face munie de saillies 69, dans celle de ses parties qui correspond au prolongement 23, des bords tombés 72, qui sont destinés à venir porter contre les épaulements 37 de ce prolongement 23, et dont la hauteur est telle qu'il affleure avec le débouché 36 de ce prolongement 23 lorsque ces bords tombés 72 sont en appui contre ces épaulements 37.

En pratique, les nervures 70, qui s'étendent du même côté que les bords tombés 72, ont une hauteur inférieure à celle des bords tombés 72.

A son extrémité, c'est-à-dire à celle de ses extrémités qui correspond au prolongement 23, le couvercle 35 comporte, en outre, transversalement, un flasque 73 qui s'étend en saillie tant du côté de sa face lisse 68 que du côté de sa face munie de saillies 69.

La hauteur de ce flasque 73 du côté de la face lisse 68 est relativement faible, en étant sensiblement de l'ordre de celle de la nervure 45 que présente en saillie sur sa tranche la paroi transversale d'extrémité 30 du prolongement 23.

Par contre, la hauteur du flasque 73 du côté de la face munie de saillies 69 est plus importante.

Elle est en effet sensiblement égale à celle des bords tombés 72.

Dans sa partie correspondant au logement 22, le couvercle 35 présente, aussi, latéralement, des bords tombés 75, mais ceux-ci ont une hauteur largement inférieure à celle des bords tombés 72 précédents.

Dans la forme de réalisation plus particulièrement représentée sur les figures 1 à 7, le couvercle 35 présente, en outre, latéralement, en saillie sur sa tranche, dans sa partie correspondant au logement 22, des ergots 76, et, en correspondance, pour la pénétration de ces ergots 76, les parois latérales 26 de ce logement 22 présentent, chacune, sur leur tranche, une échancrure 78.

Dans sa partie correspondant au logement 22, le couvercle 35 présente, en saillie sur sa face lisse 68, dans les formes de réalisation représentées, une languette 79 propre à en faciliter la préhension, et, donc, l'extraction.

Pour en faciliter le moulage, cette languette 79 s'étend au droit d'une ouverture 80.

Dans les formes de réalisation représentées, elle s'étend en oblique.

Par ailleurs, dans ces formes de réalisation, le couvercle 35 présente, transversalement, dans sa zone médiane, entre sa partie correspondant au logement 22 et sa partie correspondant au prolongement 23, une fenêtre 82 par laquelle, lorsqu'il est en place, il vient s'engager sur l'extrémité libre du piétement 56.

Suivant un développement de l'invention, le couvercle 35 ainsi constitué est sécable.

Il présente, transversalement, de place en place, dans sa partie correspondant au prolongement 23, des zones de moindre résistance, qui, dans les formes de réalisation représentées, résultent de saignées 84 l'affectant du côté de sa face munie de saillies 69.

Ces saignées 84 s'étendent aussi bien sur cette face munie de saillies 69 que sur les bords tombés 72 flanquant celle-ci.

Elles sont établies à des distances prédéterminées, correspondant aux largeurs usuelles pour les goulottes 15 susceptibles d'être mises en oeuvre.

Pour chacune d'elles un repère indique la largeur de la goulotte correspondante.

En pratique, les nervures 70 s'étendent en bordure de ces saignées 84.

Enfin, dans les formes de réalisation représentées, la partie du couvercle 35 correspondant au logement 22 comporte, elle aussi, une portion sécable 85, et, par sa largeur, cette portion sécable 85 est apte à s'étendre d'une des parois longitudinales 29 du prolongement 23 à l'autre, à la faveur des saignées 38 que présente ce prolongement 23 le long de ses parois longitudinales 29.

Par exemple, et à l'image des opercules défonçables 43, cette portion sécable 85 ne se trouve reliée que par points au reste du couvercle 35.

Par des saignées 86 présentes sur la face munie de saillies 69, elle est ajustable en hauteur.

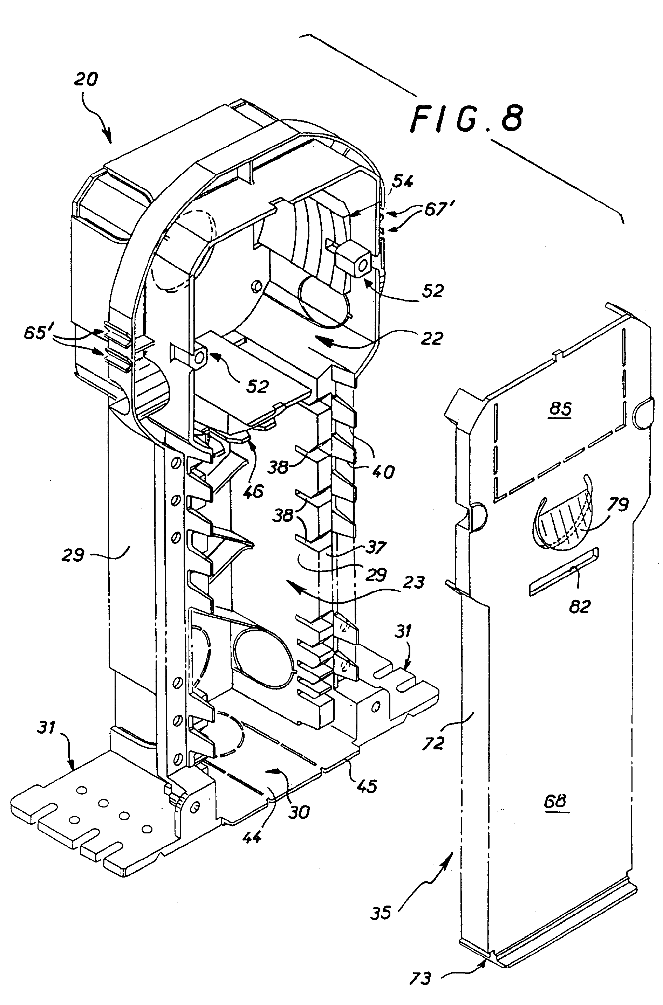

Dans la forme de réalisation plus particulièrement représentée sur la figure 8, les dispositions sont du même type que les précédentes.

Mais, d'une part, le prolongement 23 a une longueur supérieure, et, d'autre part, les zones de fixation 52 sont disposées suivant une transversale perpendiculaire à l'axe de ce prolongement 23.

En outre, les moyens d'emboîtement 65', 67' prévus latéralement sur la collerette 64 sont alors des moyens d'emboîtement du type à queue d'aronde.

Ces moyens d'emboîtement sont de surcroît doublés.

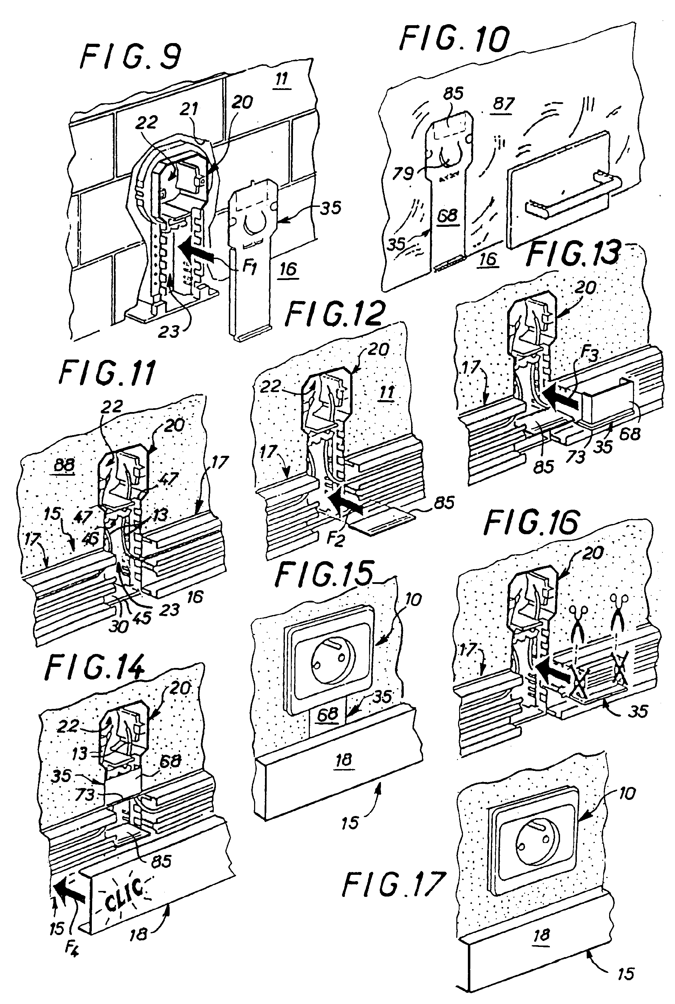

Les figures 9 à 17 se rapportent, à titre d'exemple, au cas où la boîte d'encastrement 20 est du type de celle représentée sur la figure 8.

Après sa mise en place dans la cavité 21 du mur 11 à équiper, le couvercle 35 est lui-même mis en place, suivant la flèche F1 de la figure 9, du côté de sa face lisse 68, et, tel que schématisé sur les figures 10 et 11, il est procédé à la finition du mur 11, par exemple d'abord par application d'une couche de plâtre et/ou d'enduit 87, figure 10, puis par application d'un quelconque revêtement de surface 88, tel que couche de peinture, papier peint ou tapisserie.

Ainsi qu'il est aisé de le comprendre, la collerette 64, et, avec leurs perçages 42, les retours en équerre 41, facilitent l'ancrage du plâtre et/ou de l'enduit mis en oeuvre.

Il est procédé, ensuite, après retrait du couvercle 35 par traction sur sa languette 79, à la mise en place de deux tronçons de corps de goulotte 17 de part et d'autre de la boîte d'encastrement 20, figure 11, en venant faire buter ces tronçons de corps de goulotte 17 contre la nervure 45 prévue à cet effet sur la tranche de la paroi transversale d'extrémité 30 du prolongement 23 de cette boîte d'encastrement 20.

Il est procédé, ensuite, à la mise en place, par l'avant, des conducteurs électriques 13, en faisant déboucher ceux-ci dans le prolongement 23, puis en les engageant, chacun respectivement, dans les passages 47 faisant communiquer ce prolongement 23 avec le logement 22, sous les bras 48 de la cloison 46, jusqu'à leur pénétration dans le logement 22.

Dans le cas où la goulotte 15 comporte d'autres conducteurs électriques à séparer des conducteurs électriques 13 précédents, la portion sécable 85 du couvercle 35 est détachée, puis ajustée en hauteur par découpe, et, tel que schématisé par la flèche F2 sur la figure 12, elle est engagée dans des saignées 38 du prolongement 23 de la boîte d'encastrement 20, pour venir en substitution à la portion manquante de la cloison correspondante du corps 17 de cette goulotte 15.

La partie du couvercle 35 correspondant au prolongement 23 de la boîte d'encastrement 20 est tronçonnée à son tour, suivant celles de ses saignées 84 qui correspondent à la largeur de la goulotte 15.

Tel que schématisé par la flèche F3 de la figure 13, le couvercle 35 ainsi réduit est alors emboîté dans le prolongement 23, dans la portion de celui-ci s'étendant entre la goulotte 15 et le logement 22.

Par exemple, et tel que représenté à la figure 13, cet emboîtement peut se faire du côté de la face lisse 68 du couvercle 35.

Quoi qu'il en soit, au terme de cet emboîtement, son flasque 73 s'engage dans deux saignées 38 du prolongement 23, et, pour les raisons exposées précédemment, il vient alors s'étendre à ras avec le débouché 36 de ce prolongement 23, et, donc, à ras avec la surface du mur 11.

Tel que schématisé par la flèche F4 de la figure 14, il est procédé ensuite, à la mise en place du couvercle 18 de la goulotte 15.

Ce couvercle 18 vient non seulement coiffer les tronçons de corps de goulotte 17, mais encore, en continuité avec ceux-ci, d'une part, la nervure 45 que présente en saillie sur sa tranche la paroi transversale d'extrémité 30 du prolongement 23, et, d'autre part, la partie correspondante du flasque d'extrémité 73 du couvercle 35.

Ainsi se trouve avantageusement reconstituée une certaine continuité de paroi pour le corps de goulotte 17 au niveau de son recouvrement par le couvercle 18.

Il est procédé, ensuite, au câblage du mécanisme de l'appareil électrique 10, puis à la mise en place de celui-ci dans le logement 22 de la boîte d'encastrement 20, à l'aide, par exemple, des vis 51.

Le mou éventuel des conducteurs électriques 13 peut ensuite avantageusement être absorbé dans le prolongement 23 de la boîte d'encastrement 20.

Il est procédé, enfin, à la mise en place du reste de l'appareil électrique 10, figure 15, suivant des opérations usuelles en la matière.

Sur cette figure 15, le couvercle 35 reste apparent.

Mais, bien entendu, il peut être lui aussi recouvert du revêtement de surface 88, par application local de celui-ci.

Dans la variante de mise en oeuvre illustrée par les figures 16 et 17, le couvercle 35 est mis en place du côté de sa face munie de saillies 69.

Une fois emboîté dans le prolongement 23, ce couvercle 35 s'étend donc alors en retrait par rapport au débouché 36 de ce prolongement 23, avec ses nervures 70 dirigées vers l'avant.

Le volume qu'il ménage ainsi entre lui et ce débouché peut dès lors être comblé, et la finition du mur 11 être alors reprise localement en conséquence.

Comme précédemment, les nervures 70 du couvercle 35 facilitent alors l'ancrage du plâtre et/ou de l'enduit mis en oeuvre.

Il est en de même des échancrures 40 des parois longitudinales 29 du prolongement 23, qui, de surcroît, permettent alors en outre avantageusement une continuité avec le plâtre et/ou l'enduit précédemment posé de part et d'autre de ce prolongement 23.

Pour le reste, les opérations sont du même type que les précédentes.

Mais, au terme de ces opérations, rien n'est apparent autour de l'appareil électrique 10.

Bien entendu, la présente invention ne se limite pas aux formes de réalisation et/ou de mise en oeuvre décrites et représentées, mais englobe toute variante d'exécution.

En particulier, si la boîte d'encastrement suivant l'invention convient tout particulièrement au cas où les conducteurs électriques nécessaires à la desserte de l'appareil électrique concerné sont logés dans une goulotte disposée en saillie sur le mur ou la cloison à équiper, elle convient également tout aussi bien, grâce aux opercules défonçables prévus à cet effet sur ses diverses parois et sur son fond, au cas où ces conducteurs électriques sont logés dans des tubes noyés au sein même du matériau constitutif de ce mur ou de cette cloison.

De même, elle convient au cas où ces conducteurs électriques sont logés dans une goulotte dont le corps est au moins en partie encastré dans un tel mur ou une telle cloison et dont le couvercle s'arrête alors évidemment au ras de ce mur ou de cette cloison, sans aller, comme précédemment, jusqu'à la semelle de son corps.

Dans ce cas, la boîte d'encastrement suivant l'invention étant adossée, par la paroi transversale d'extrémité de son prolongement, contre le corps de la goulotte, dûment ajouré localement en conséquence, c'est la partie centrale de cette paroi transversale d'extrémité qui est éliminée pour le passage des conducteurs électriques.

## Revendications

1. Boîte d'encastrement, notamment pour appareil électrique, qui est destinée à être implantée au sein même du matériau constitutif d'un quelconque mur ou d'une quelconque cloison, et dont le volume intérieur forme un logement (22) propre à la réception du mécanisme d'un tel appareil électrique, avec, latéralement, un prolongement (23) dont le volume intérieur est en liaison avec celui dudit logement (22), caractérisée en ce que, sur une partie au moins de sa longueur, ledit prolongement (23) est au moins en partie ouvert en façade, en sorte que son volume intérieur est au moins en partie accessible de l'avant, et il lui est associé un couvercle amovible (35) apte à en refermer ledit volume intérieur.

2. Boîte d'encastrement suivant la revendication 1, caractérisée en ce que ledit prolongement (23) a un profil en U sur toute sa longueur.

3. Boîte d'encastrement suivant la revendication 2, caractérisée en ce que, intérieurement, ledit prolongement (23) présente, le long de ses parois longitudinales (29), en retrait par rapport à son débouché (36), des épaulements (37).

4. Boîte d'encastrement suivant l'une quelconque des revendications 2, 3, caractérisée en ce que, intérieurement, ledit prolongement (23) présente, de place en place, le long de ses parois longitudinales (29), et en correspondance de l'une à l'autre de celles-ci, des saignées (38).

5. Boîte d'encastrement suivant les revendications 3, 4, prises conjointement, caractérisée en ce que lesdites saignées (38) affectent lesdits épaulements (37).

6. Boîte d'encastrement suivant l'une quelconque des revendications 3 à 5, caractérisée en ce que, au-delà desdits épaulements (37), les parois longitudinales (29) dudit prolongement (23) sont crénelées.

7. Boîte d'encastrement suivant l'une quelconque des revendications 2 à 6, caractérisée en ce que, extérieurement, ledit prolongement (23) présente, le long de ses parois longitudinales (29), en retrait par rapport à son débouché (36), des retours en équerre (41).

8. Boîte d'encastrement suivant la revendication 7, caractérisée en ce que lesdits retours en équerre (41) sont ajourés.

9. Boîte d'encastrement suivant l'une quelconque des revendications 1 à 8, caractérisée en ce que la paroi transversale d'extrémité (30) dudit prolongement (23) présente en saillie une nervure (45).

10. Boîte d'encastrement suivant l'une quelconque des revendications 1 à 9, caractérisée en ce que ledit prolongement (23) comporte intérieurement, à distance de sa paroi transversale d'extrémité (30), une cloison (46), qui s'étend transversalement, entre ses parois longitudinales (29), tout en laissant libres des passages (47) entre elle et lesdites parois longitudinales (29), et qui comporte des bras (48) en porte-à-faux à l'aplomb desdits passages (47).

11. Boîte d'encastrement suivant la revendication 10, caractérisée en ce que ladite cloison (46) présente des fentes (50) qui, débouchant sur sa tranche, sont aptes à recevoir en attente des vis.

12. Boîte d'encastrement suivant l'une quelconque des revendications 1 à 11, caractérisée en ce que le couvercle (35) associé audit prolongement (23) est réversible et comporte une face lisse (68) et une face munie de saillies (69).

13. Boîte d'encastrement suivant les revendications 3 et 12, prises conjointement, caractérisée en ce que, du côté de sa face munie de saillies (69), ledit couvercle (35) présente, latéralement, des bords tombés (72), qui sont destinés à venir porter contre les épaulements (37) que présente ledit prolongement (23), et dont la hauteur est telle qu'il affleure à ras avec le débouché (36) dudit prolongement (23) lorsque ces bords tombés (72) sont en appui contre lesdits épaulements (37).

14. Boîte d'encastrement suivant l'une quelconque des revendications 12, 13, caractérisée en ce que, à son extrémité, ledit couvercle (35) comporte, transversalement, un flasque (73) qui s'étend en saillie tant du côté de sa face lisse (68) que du côté de sa face munie de saillies (69).

15. Boîte d'encastrement suivant l'une quelconque des revendications 1 à 14, caractérisée en ce que le couvercle (35) associé audit prolongement (23) est sécable, ledit couvercle (35) présentant, transversalement, de place en place, des zones de moindre résistance.

16. Boîte d'encastrement suivant les revendications 12 et 15, prises conjointement, caractérisée en ce que lesdites zones de moindre résistance résultent de saignées (84) affectant ledit couvercle (35) du côté de sa face munie de saillies (69).

17. Boîte d'encastrement suivant l'une quelconque des revendications 1 à 16, caractérisée en ce que le couvercle (35) associé audit prolongement (23) est également apte à refermer, d'un seul tenant, ledit logement (22).

18. Boîte d'encastrement suivant la revendication 17, caractérisée en ce que la partie dudit couvercle (35) correspondant audit logement (22) présente en saillie une languette (79) propre à en faciliter la préhension, et, donc, l'extraction.

19. Boîte d'encastrement suivant les revendications 4 et 17, prises conjointement, caractérisée en ce que la partie dudit couvercle (35) correspondant audit logement (22) comporte une portion sécable (85) apte à s'étendre d'une des parois longitudinales (29) dudit prolongement (23) à l'autre à la faveur des saignées (38) que présente ce prolongement (23) le long desdites parois longitudinales (29).

20. Boîte d'encastrement suivant l'une quelconque des revendications 1 à 19, caractérisée en ce que, au moins deux zones de fixation (52) étant prévues dans ledit logement (22) pour la fixation du mécanisme concerné, lesdites zones de fixation (52) comportent chacune, d'une part, un perçage (53), propre à une fixation par vis, et, d'autre part, un jambage (54), propre à une fixation par griffes, et les jambages (54) ainsi présents dans ledit logement (22) sont d'un seul tenant avec une semelle (58), qui, distincte du fond (25) dudit logement (22), double extérieurement ledit fond (25), lesdits jambages (54) traversant ledit fond (25) à la faveur d'évidements (59) prévus à cet effet dans celui-ci.

21. Boîte d'encastrement suivant l'une quelconque des revendications 1 à 20, caractérisée en ce qu'elle présente, en saillie, extérieurement, autour dudit logement (22), une collerette (64), qui est munie, sur deux côtés opposés, de moyens d'emboîtement (65-67, 65'-67') complémentaires, et par laquelle elle est ainsi apte à être solidarisée latéralement à une autre boîte munie de moyens d'emboîtement de même type.

## Claims

1. A flush-mounted box, in particular for a piece of electrical equipment, the flush-mounted box being intended to be embedded right inside the material of which a wall or partition wall is made and whose internal volume forms a housing (22) capable of receiving the mechanism of a piece of electrical equipment of this kind, with a lateral extension (23) whose internal volume communicates with that of said housing (22), characterised in that over at least part of its length said extension (23) is at least partly open towards the front in such a way that its internal volume is at least partly accessible from the front, and associated with it is a removable lid (35) capable of closing said internal volume of the extension.

2. A flush-mounted box according to Claim 1, characterised in that said extension (23) is of U-shaped profile over its entire length.

3. A flush-mounted box according to Claim 2, characterised in that internally said extension (23) has shoulders (37) along its longitudinal walls (29), the shoulders being offset from the front opening (36) of the extension.

4. A flush-mounted box according to any one of Claims 2, 3, characterised in that internally said extension (23) has grooves (38) from place to place along its longitudinal walls (29) in corresponding relationship.

5. A flush-mounted box according to Claims 3, 4 taken conjointly, characterised in that said grooves (38) are provided on said shoulders (37).

6. A flush-mounted box according to any one of Claims 3 to 5, characterised in that beyond said shoulders (37), the longitudinal walls (29) of said extension (23) are crenellated.

7. A flush-mounted box according to any one of Claims 2 to 6, characterised in that said extension (23) has along the exterior of its longitudinal walls (29) right-angled portions (41) set back from its front opening (36).

8. A flush-mounted box according to Claim 7, characterised in that said right-angled offset portions (41) are provided with holes.

9. A flush-mounted box according to any one of Claims 1 to 8, characterised in that the transverse end wall (30) of said extension (23) has a projecting rib (45).

10. A flush-mounted box according to any one of Claims 1 to 9, characterised in that at a spacing from its transverse end wall (30), said extension (23) has an internal partition wall (46) which extends transversely between its longitudinal walls (29), whilst leaving passages (47) free between it and said longitudinal walls (29), and comprising cantilever arms (48) plumb with said passages (47).

11. A flush-mounted box according to Claim 10, characterised in that said partition wall (46) has slots (50) which open into its edge and which are capable of receiving screws pending use thereof.

12. A flush-mounted box according to any one of Claims 1 to 11, characterised in that the lid (35) associated with said extension (23) is reversible and comprises a smooth face (68) and a face which is provided with projections (69).

13. A flush-mounted box according to Claims 3 and 12 taken conjointly, characterised in that on the face provided with projections (69) said lid (35) has lateral upstanding edges (72) which are intended to bear against the shoulders (37) which said extension (23) has and the height of which is such that it is level with the front opening (36) of said extension (23) when the upstanding edges (72) are bearing against said shoulders (37).

14. A flush-mounted box according to any one of Claims 12, 13, characterised in that at its end said lid (35) comprises a transverse flange (73) which extends in projecting fashion both on the side of its smooth face (68) and on the side of its face provided with projections (69).

15. A flush-mounted box according to any one of Claims 1 to 14, characterised in that the lid (35) associated with said extension (23) can be cut, said lid (35) having transverse regions of reduced strength from place to place.

16. A flush-mounted box according to Claims 12 and 15 taken conjointly, characterised in that said regions of reduced strength result from grooves (84) which are provided on said lid (35) on the side of its face provided with projections (69).

17. A flush-mounted box according to any one of Claims 1 to 16, characterised in that the lid (35) associated with said extension (23) is also capable of closing said housing (22) integrally.

18. A flush-mounted box according to Claim 17, characterised in that the part of said lid (35) which corresponds to said housing (22) has a projecting tab (79) capable of making it easier to hold, and thus to be pulled out.

19. A flush-mounted box according to Claims 4 and 17 taken conjointly, characterised in that the part of said lid (35) corresponding to said housing (22) comprises a portion (85) which can be cut and which is capable of extending from one of the longitudinal walls (29) of said extension (23) to the other by virtue of grooves (38) provided on the extension (23) along said longitudinal walls (29).

20. A flush-mounted box according to any one of Claims 1 to 19, characterised in that at least two fixing areas (52) are provided in said housing (22) to fix the mechanism in question, said fixing areas (52) each comprising, on the one hand, a hole (53), which is capable of use for a screw fixture, and, on the other hand, a leg (54) which is capable of use for snap-fixture, and the legs (54) thus present in said housing (22) are integral with a base plate (58) which is separate from the bottom (25) of said housing (22) and which forms a covering over the outside of said bottom (25), said legs (54) passing through said bottom (25) by virtue of recesses (59) provided to that end in it.

21. A flush-mounted box according to any one of Claims 1 to 20, characterised in that it has a collar (64) which projects outwardly around said housing (22) and which is provided on two oppositely disposed sides with complementary snap-fastener means (65-67, 65'-67') and by means of which it is thus capable of being secured laterally to another box provided with snap-fastener means of the same type.

## Patentansprüche

1. Einbaudose, insbesondere für elektrisches Gerät, die zum Unterputzeinbau in dem eine beliebige Mauer oder eine beliebige Trennwand bildenden Material bestimmt ist, und deren Innenvolumen einen Raum (22) bildet, der zur Aufnahme der Mechanik eines solchen elektrischen Gerätes geeignet ist, mit einer seitlichen Verlängerung (23), deren Innenvolumen mit dem des genannten Raumes (22) verbunden ist,
dadurch **gekennzeichnet**,
daß die Verlängerung (23) auf mindestens einem Teil ihrer Länge zumindest zum Teil zur Vorderseite hin offen ist, so daß ihr Innenvolumen zumindest zum Teil von vorne her zugänglich ist, und daß ihr ein abnehmbarer Deckel zugeordnet ist, der zum Verschließen von deren Innenvolumen geeignet ist.

2. Einbaudose nach Anspruch 1,
dadurch **gekennzeichnet,**
daß die Verlängerung (23) über ihre gesamte Länge ein U-Profil aufweist.

3. Einbaudose nach Anspruch 2,
dadurch **gekennzeichnet,**
daß die Verlängerung (23) im Inneren längs ihrer Längs wände (29) verlaufende, bezüglich ihrer Öffnung (36) zurückversetzte Schultern (37) aufweist.

4. Einbaudose nach einem der Ansprüche 1 oder 3,
dadurch **gekennzeichnet**,
daß die Verlängerung (23) im Inneren stellenweise längs ihrer Längswände (29) verlaufende, untereinander verbundene Einschnitte (38) aufweist.

5. Einbaudose nach Anspruch 3 und 4,
dadurch **gekennzeichnet**,
daß die Einschnitte (38) bei den Schultern (37) vorhanden sind.

6. Einbaudose nach einem der Ansprüche 3 bis 5,
dadurch **gekennzeichnet**,
daß die Längswände (29) der Verlängerung (23) jenseits der Schultern (37) gerippt ausgebildet sind.

7. Einbaudose nach einem der Ansprüche 2 bis 6,
dadurch **gekennzeichnet**,
daß die Verlängerung (23) auf der Außenseite längs ihrer Längswände (29) in bezug auf ihre Öffnung (36) zurückver- setzte Randstege (41) aufweist.

8. Einbaudose nach Anspruch 7,
dadurch **gekennzeichnet**,
daß die Randstege (41) durchbrochen sind.

9. Einbaudose nach einem der Ansprüche 1 bis 8,
dadurch **gekennzeichnet**,
daß die äußere Querwand (30) der Verlängerung (23) eine vorstehende Verrippung (45) aufweist.

10. Einbaudose nach einem der Ansprüche 1 bis 9,
dadurch **gekennzeichnet**,
daß die Verlängerung (23) innen mit Abstand zu ihrer äußeren Querwand (30) eine Zwischenwand (46) aufweist, die sich quer zwischen ihren Längswänden (29) erstreckt, wobei sie zwischen sich und den Längswänden (29) Durchführungen (47) freiläßt, und die senkrecht zu den Durchführungen (47) auskragende Arme (48) umfaßt.

11. Einbaudose nach Anspruch 10,
dadurch **gekennzeichnet**,
daß die Zwischenwand (46) Schlitze (50) aufweist, die an deren Rand münden und zur Aufnahme von Schrauben bereit und geeignet sind.

12. Einbaudose nach einem der Ansprüche 1 bis 11,
dadurch **gekennzeichnet**,
daß der der Verlängerung (23) zugeordnete Deckel (35) zweiseitig ausgebildet ist und eine glatte Seite (68) und eine mit Vorsprüngen (69) versehene Seite umfaßt.

13. Einbaudose nach den Ansprüchen 3 bis 12,
dadurch **gekennzeichnet**,
daß der Deckel (35) auf Seiten seiner mit Vorsprüngen (69) versehenen Seite seitlich nach unten weisende Ränder (72) aufweist, die dazu bestimmt sind, sich auf den Schultern (37) abzustützen, welche die Verlängerung (23) aufweist, wobei die Höhe der Ränder so gewählt ist, daß der Deckel mit der Öffnung (36) der Verlängerung (23) bündig abschließt, wenn diese Ränder (72) auf den Schultern (37) aufliegen.

14. Einbaudose nach einem der Ansprüche 12 oder 13,
dadurch **gekennzeichnet**,
daß der Deckel auf seiner Außenseite einen querverlaufenden Flansch (73) umfaßt, der ebenso von seiner glatten Seite (68) wie von seiner mit Vorsprüngen (69) versehenen Seite abstrebt.

15. Einbaudose nach einem der Ansprüche 1 bis 14,
dadurch **gekennzeichnet**,
daß der der Verlängerung (23) zugeordnete Deckel (35) teilbar ist, wobei der Deckel (35) stellenweise in Querrichtung verlaufende Zonen geringerer Festigkeit aufweist.

16. Einbaudose nach Anspruch 12 und 15,
dadurch **gekennzeichnet**,
daß sich die Zonen geringerer Festigkeit aus Einschnitten (84) ergeben, die an dem Deckel (35) auf seiner mit Vorsprüngen (69) versehenen Seite vorhanden sind.

17. Einbaudose nach einem der Ansprüche 1 bis 16,
dadurch **gekennzeichnet,**
daß der der Verlängerung (23) zugeordnete Deckel (35) geeignet ist, in einem Stück zugleich den Raum (22) zu verschließen.

18. Einbaudose nach Anspruch 17,
dadurch **gekennzeichnet**,
daß der dem Raum (22) zugeordnete Teil des Deckels (35) eine abstrebende Zunge (79) aufweist, die geeignet ist, dessen Greifen und damit Abnehmen zu erleichtern.

19. Einbaudose nach Anspruch 4 und 17,
dadurch **gekennzeichnet**,
daß der dem Raum (22) zugeordnete Teil des Deckels (35) einen abtrennbaren Abschnitt (85) umfaßt, der so ausgebildet ist, daß er sich von einer Längswand (29) der Verlängerung (23) zur anderen erstrecken kann mittels Einschnitten (38), welche diese Verlängerung (23) längs ihrer Längswand (29) aufweist.

20. Einbaudose nach einem der Ansprüche 1 bis 19,
dadurch **gekennzeichnet**,
daß mindestens zwei Befestigungszonen (52) in dem Raum (22) zur Befestigung der betroffenen Mechanik vorgesehen sind, daß die Befestigungszonen (52) jeweils einerseits ein Loch (53) für eine Schraubenbefestigung und andererseits einen Schenkel (54) für eine Hakenbefestigung umfassen, und daß die in dem Raum (22) also vorhandenen Schenkel (54) mit einem Träger (58) einstückig ausgebildet sind, welcher unabhängig von der Rückwand (25) des Raumes (22) die Rückwand (25) auf der Außenseite verdoppelt, wobei die Schenkel (54) die Rückwand (25) mittels zu diesem Zweck in dieser vorgesehener Ausnehmungen (59) durchdringen.

21. Einbaudose nach einem der Ansprüche 1 bis 20,
dadurch **gekennzeichnet**,
daß sie auf der Außenseite um den Raum (22) herum einen vorstehenden Bördelrand (64) aufweist, welcher auf zwei einander abgewandten Seiten mit komplementären Einlaßmitteln (65 - 67, 65' - 67') ausgestattet ist, und durch welchen sie auf diese Weise geeignet ist, seitlich an einem anderen mit Einlaßmitteln gleicher Art ausgerüsteten Gehäuse befestigt zu werden.
